# EUROPÄISCHE PATENTSCHRIFT

(11) **EP 4 021 773 B1**
(45) Veröffentlichungstag und Bekanntmachung des Hinweises auf die Patenterteilung: **05.04.2023**
(21) Anmeldenummer: 21820463.4
(22) Anmeldetag: 15.11.2021
(51) Int. Cl.: B60W 30/18, B60W 50/08, B60W 60/00

(54) **VERFAHREN UND FAHRERASSISTENZSYSTEM ZUM AUTOMATISCHEN ÜBERFÜHREN EINES FAHRZEUGS IN DEN STILLSTAND**
METHOD AND DRIVER ASSISTANCE SYSTEM FOR AUTOMATICALLY BRINGING A VEHICLE TO A STANDSTILL
PROCÉDÉ ET SYSTÈME D'ASSISTANCE À LA CONDUITE POUR AMENER AUTOMATIQUEMENT UN VÉHICULE À L'ARRÊT

(30) Priorität: 18.11.2020 DE 102020130516
(43) Veröffentlichungstag der Anmeldung: 06.07.2022
(73) Patentinhaber: Bayerische Motoren Werke Aktiengesellschaft, 80809 München (DE)
(72) Erfinder: REUTER, Sebastian, 81827 München (DE); KAULE, Dirk, 80807 München (DE); SPIELMANN, Michael, 82140 Olching (DE); HANK, Hans-Peter, 81545 Muenchen (DE); LOUIS, Lawrence, 80639 München (DE)
(86) Internationale Anmeldenummer: PCT/EP2021/081700
(87) Internationale Veröffentlichungsnummer: WO 2022/106360

(56) Entgegenhaltungen:
- EP-A1- 2 314 490
- WO-A1-2020/157533
- DE-A1-102013 009 339
- DE-A1-102015 003 124
- DE-B3-102018 004 303

## Beschreibung

Die Erfindung betrifft ein Verfahren und ein Fahrerassistenzsystem zum automatischen Überführen eines Fahrzeugs in den Stillstand. Dabei kann das Überführen des Fahrzeugs in den Stillstand insbesondere aus einem automatisierten Fahrbetrieb heraus erfolgen. Des Weiteren betrifft die Erfindung ein Computerprogramm sowie ein computerlesbares Medium, welche ein solches System bzw. ein solches Verfahren unterstützen.

Die Erfindung kann insbesondere im Rahmen eines Fahrerassistenzsystems (FAS) eingesetzt werden, welches ein wenigstens teilweise automatisiertes Fahren des Fahrzeugs ermöglicht.

Unter dem Begriff "automatisiertes Fahren" kann im Rahmen dieses Dokuments ein Fahren mit automatisierter Längs- oder Querführung oder ein autonomes Fahren mit automatisierter Längs- und Querführung verstanden werden. Der Begriff "automatisiertes Fahren", wie er in diesem Dokument verwendet wird, umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade gemäß der Definition der BASt entsprechen den SAE-Level 1 bis 4 der Norm SAE J3016 (SAE - Society of Automotive Engineering). Beispielsweise entspricht das hochautomatisierte Fahren (HAF) gemäß der BASt dem Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Als Teil eines Sicherheitskonzepts für das (teil-)automatisierte Fahren werden von den Fahrzeug- und Komponentenherstellern Verfahren entwickelt, die bei gegebenen Fehlerfall das Fahrzeug automatisch in einen sogenannten risikominimalen Zustand (Englisch: "Minimal Risk Condition" - MRC) überführen. Ein automatisiertes Fahrmanöver, welches ein Fahrzeug in einen MRC überführt, wird üblicherweise als "Minimal Risk Maneuvre" oder "Minimum Risk Maneuver" (MRM) bezeichnet.

Die Konzepte MRC und MRM können insbesondere aus den Grundsätzen der Norm ISO 26262 zur Funktionalen Sicherheit für Serienfahrzeuge (vgl. z.B. ISO 26262:2018, S. 9) abgeleitet werden, welches einen sicheren Zustand als einen Betriebsmodus eines Systems bzw. einer Komponente mit einem tolerierbaren Risiko definiert. Gemäß dieser Sichtweise ist ein MRM eine Notfalloperation, um eine MRC, der auch als sicherer Zustand bezeichnet wird, zu erreichen. Der Zweck des MRM besteht also darin, das Fahrzeug innerhalb des zur Verfügung stehenden Funktionsumfangs auf ein tolerierbares Risiko zu bringen.

Es wird prinzipiell angestrebt, dass durch ein MRM so schnell wie möglich ein MRC erreicht wird. Dabei ist jedoch auch zu beachten, dass das Fahrzeug während des MRM (nach Möglichkeit) keine temporären Übergangszustände einnehmen sollte, die ein erhöhtes Risiko für die Fahrzeuginsassen und/oder für andere Verkehrsteilnehmer bedeuten.

Beispielsweise stellt im Falle einer Level-3-Fahrfunktion, die das Fahrzeug bei hoher Geschwindigkeit auf einer Autobahn automatisiert steuert, im Allgemeinen der Stillstand des Fahrzeuges den risikominimalen Zustand (MRC) dar. Die Transition des Fahrzeugzustands in den Stillstand im Rahmen eines MRM darf dabei jedoch nach Möglichkeit keine Übergangszustände einnehmen, die das Fahrzeug oder andere Verkehrsteilnehmer einem erhöhten Risiko aussetzen. Potenzielle Quellen für ein erhöhtes Risiko beim Abbremsen des Fahrzeugs sind dabei u.a. das Fahrzeug umgebende Verkehrsteilnehmer, Hindernisse und Randbebauung sowie Fahrbahneigenschaften, z.B. hinsichtlich des Fahrbahnreibwerts unter Berücksichtigung der Einflüsse von Temperatur und Witterung. Das Fahrzeug muss im Rahmen des MRM unter Beachtung derartiger Risikoquellen in den Stillstand abgebremst werden.

Die Dokumente DE 10 2018 004 303 B3 und EP 2 314 490 A1 offenbaren bekannte Verfahren bzw. Fahrerassistenzsysteme zum automatischen Überführen eines Fahrzeugs in den Stillstand.

Hiervon ausgehend liegt der Erfindung die Aufgabe zugrunde, ein Verfahren bzw. ein Fahrerassistenzsystem anzugeben, welche es erlauben, ein Fahrzeug auf eine möglichst sichere Weise aus einer Fahrt bei einer vergleichsweise hohen Geschwindigkeit in den Stillstand zu überführen.

Die Aufgabe wird durch ein Verfahren bzw. ein Fahrerassistenzsystem gemäß den unabhängigen Patentansprüchen gelöst. Vorteilhafte Ausführungsformen sind in den abhängigen Ansprüchen angegeben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Patentanspruchs, einer Teilungsanmeldung oder einer Nachanmeldung gemacht werden kann. Dies gilt in gleicher Weise für in der Beschreibung erläuterte technische Lehren, die eine von den Merkmalen der unabhängigen Patentansprüche unabhängige Erfindung bilden können.

Ein erster Aspekt der Erfindung betrifft ein zum automatischen Überführen eines Fahrzeugs in den Stillstand.

Bei dem Fahrzeug kann es sich insbesondere um ein Kraftfahrzeug handeln, d.h. um ein Landfahrzeug, das durch Maschinenkraft bewegt wird, ohne an Bahngleise gebunden zu sein. Ein Kraftfahrzeug in diesem Sinne kann z.B. als Kraftwagen, Kraftrad oder Zugmaschine ausgebildet sein.

Das Überführen des Fahrzeugs in den Stillstand kann z.B. aus einem Zustand heraus erfolgen, in welchem sich das Fahrzeug mit vergleichsweise hoher Anfangsgeschwindigkeit, wie z.B. 90 km/h oder mehr, fortbewegt. Die Anfangsgeschwindigkeit kann z.B. eine für Autobahnen typische Geschwindigkeit sein, wie z.B. 130 km/h oder mehr im Falle einer deutschen Autobahn.

Beispielsweise kann das Verfahren im Rahmen eines MRM ausgeführt werden, wobei der Stillstand, in welchen das Fahrzeug überführt wird, eine MRC, d.h. einen Zustand mit vergleichsweise geringem Risiko, darstellt.

Ein Schritt des Verfahrens ist das Verringern der Geschwindigkeit des Fahrzeugs auf eine Übergangsgeschwindigkeit, die in einem Übergangsgeschwindigkeitsbereich von 55 km/h bis 85 km/h liegt, wie z.B. bei 60 km/h oder bei 80 km/h.

Beispielsweise kann das Verringern der Geschwindigkeit unverzüglich, insbesondere unmittelbar, nach Auslösen eines MRM bzw. nach dem Erkennen der Notwendigkeit eines MRM automatisch einsetzen, wie z.B. im Falle einer ausbleibenden Fahrerreaktion auf eine Übernahmeaufforderung (Englisch: Takeover-request - TOR). Das erfindungsgemäße Überführen des Fahrzeugs in den Stillstand kann also z.B. durch eine während einer bestimmten Zeit ausbleibende Fahrerreaktion auf eine Übernahmeaufforderung ausgelöst werden. Es kann dabei z.B. vorgesehen sein, dass das Verringern der Geschwindigkeit des Fahrzeugs zu einem Zeitpunkt einsetzt, welcher im Bereich von 4 bis 6 Sekunden, wie z.B. im Bereich von 4,5 bis 5,5 Sekunden, bevorzugt 5 Sekunden, nach der Ausgabe der (erfolglosen) Übernahmeaufforderung liegt.

In Fällen, in denen das Überführen des Fahrzeugs in den Stillstand durch eine ausbleibende Fahrerreaktion auf eine Übernahmeaufforderung ausgelöst wird, kann ferner vorgesehen sein, dass eine automatische Fahrfunktion des Fahrzeugs ab dem Moment des TOR (und insbesondere bis zum Einsetzen des Verringerns 21 der Geschwindigkeit, d.h. bis zum Ablauf einer definierten Zeitintervalls, während dessen eine Fahrerreaktion auf die TOR abgewartet wird) in ihrem Funktionsumfang degradiert, z.B. in der Weise, dass ab diesem Zeitpunkt abhängig von der Fahrsituation Restriktionen an mögliche Fahrmanöver bestehen. Dies kann z.B. ein Verbot einer (insbesondere positiven) Fahrzeugbeschleunigung und oder eines Spurwechsels beinhalten.

Gemäß einer Ausführungsform erfolgt das Verringern der Geschwindigkeit auf die Übergangsgeschwindigkeit bei einer Verzögerung (d.h. einer negativen Fahrzeugbeschleunigung), die im Bereich von 2 m/s² bis 4 m/s², bevorzugt im Bereich von 2,5 m/s² bis 3,5 m/s², wie z.B. bei 3 m/s², liegt. Mit der Angabe, wonach die Verzögerung während in den vorstehend genannten Intervallen liegt, ist insbesondere gemeint, dass die jeweilige untere Intervallgrenze (z.B. 2,5 m/s²) jedenfalls zu irgendeinem Zeitpunkt während des Verringern der Geschwindigkeit erreicht oder überschritten wird und dass die obere Intervallgrenze bis zum Erreichen der Übergangsgeschwindigkeit - jedenfalls bestimmungsgemäß, d.h. wenn nicht z.B. ein langsameres oder statisches Objekt bzw. Hindernis eine stärkeres Abbremsen (z.B. bei maximal 6 m/s²) nötig macht - nicht überschritten wird.

Ein weiterer Schritt ist das Verbleiben in dem Übergangsgeschwindigkeitsbereich für ein Übergangszeitintervall mit einer Dauer von wenigstens 20 Sekunden, vorzugsweise mit einer Dauer im Bereich von 20 bis 28 Sekunden, besonders bevorzugt 23 bis 25 Sekunden, wie z.B. 24 Sekunden.

Dabei soll verstanden werden, dass die Geschwindigkeit des Fahrzeugs während des Übergangszeitintervalls bestimmungsgemäß in dem Übergangsgeschwindigkeitsbereich verbleibt, sofern nicht etwa ein langsameres oder statisches Objekt bzw. Hindernis eine weitere Verringerung der Geschwindigkeit (z.B. durch starkes Bremsen) nötig macht. Das vorgeschlagene Verfahren soll also keineswegs ausschließen, dass die Fahrzeuggeschwindigkeit während des Übergangszeitintervalls ausnahmsweise auf geringere Geschwindigkeiten unterhalb des Übergangsgeschwindigkeitsbereichs reduziert werden kann, wenn die Umfeldsituation dies (z.B. unter Sicherheitsaspekten) erfordert.

Während des Übergangszeitintervalls kann das Fahrzeug aus etwaigen Gefahrenstellen heraus bewegt werden. Um einen Halt in Gefahrenstellen zu vermeiden, kann das Fahrzeug z.B. in dieser Phase auf die Spur mit dem geringsten Risiko wechseln. Mit anderen Worten kann z.B. während des Übergangszeitintervalls ein automatischer Spurwechsel ausgeführt werden, wobei der Spurwechsel bevorzugt in eine Spur erfolgt, die als geeignet angesehen wird, um in dieser Spur oder von dieser Spur ausgehend einen Nothalt auszuführen. Als sicherster Fahrsteifen in diesem Sinne wird z.B. auf einer deutschen Autobahn im Allgemeinen die rechte Spur oder der Seitenstreifen angesehen.

Vorzugsweise ist vorgesehen, dass an Gefahrenstellen wie z.B. in Tunneln, in engen Kurven und/oder auf Brücken die Dauer des Übergangszeitintervalls dynamisch angepasst (d.h. insbesondere verlängert) werden kann, bis die entsprechenden Gefahrenstellen passiert sind.

Vorzugsweise ist während des Übergangszeitintervalls - und optional während der gesamten Ausführung des Verfahrens - vorgesehen, dass die Längsführung des Fahrzeugs in der Weise gesteuert bzw. geregelt wird, dass eine Verzögerung des Fahrzeugs (z.B. beim starken Bremsen zur Vermeidung einer Kollision mit einem Objekt oder Hindernis) den Betrag von 6 m/s² nicht überschreitet.

Nach Ablauf des Übergangszeitintervalls erfolgt ein weiteres Verringern der Geschwindigkeit des Fahrzeugs bis zum Stillstand des Fahrzeugs. Mit anderen Worten wird in dieser Phase des Manövers ein Nothalt ausgeführt, um das Fahrzeug z.B. auf einem Standstreifen oder in einer rechten Spur einer Autobahn zum Stehen zu bringen.

Gemäß einer Ausführungsform ist die Verzögerung des Fahrzeugs bei dieser weiteren Verringerung der Geschwindigkeit bis zum Stillstand auf maximal 3,5 m/s² und bevorzugt auf maximal 3,0 m/s² beschränkt. Hierdurch kann das Risiko von Auffahrunfällen während des eigentlichen Nothalts verringert werden. Eine Ausnahme hiervon greift in Fällen, in denen ein stärkeres Abbremsen z.B. durch ein Hindernis nötig wird. In solchen Fällen sind auch betragsmäßig größere Verzögerungen zugelassen, wie z.B. bis maximal 6,0 m/s².

Gemäß einer Ausführungsform ist während des Übergangszeitintervalls eine (wenigstens teilweise) Übernahme der Fahrzeugsteuerung durch den Fahrer noch möglich. Es können also Vorkehrungen dafür getroffen sein, dass der Fahrer während des Übergangszeitintervalls, die Fahrzeugsteuerung noch jederzeit übernehmen kann. Der Fahrer kann also z.B. einer zuvor verpassten Übernahmeaufforderung, die das Verfahren zum automatischen Überführen des Fahrzeugs in den Stillstand ausgelöst hat, während der Stabilisierungsphase noch nachträglich nachkommen und die Fahrzeugführung übernehmen. Demgegenüber kann z.B. vorgesehen sein, dass bei dem anschließenden weiteren Verringern der Geschwindigkeit (d.h. während des eigentlichen Nothalts) keine Übernahme der Fahrzeugführen durch den Fahrer mehr möglich ist.

Gemäß einem zweiten Aspekt der Erfindung wird ein Fahrerassistenzsystem (FAS), welches zum Ausführen eines Verfahrens dem ersten Erfindungsaspekt eingerichtet ist, vorgeschlagen.

Ein erfindungsgemäßes Verfahren kann also insbesondere mittels eines erfindungsgemäßen Fahrerassistenzsystems ausgeführt werden. Daher können Ausführungsformen des erfindungsgemäßen Fahrerassistenzsystems in analoger Weise den vorstehend und nachfolgend beschriebenen vorteilhaften Ausführungsformen des erfindungsgemäßen Verfahrens entsprechen und umgekehrt.

Das FAS umfasst eine oder mehrere Steuervorrichtungen zum Erzeugen entsprechender Steuersignale und zum Ausgeben der Steuersignale an geeignete (insbesondere die Längsführung beeinflussende) Aktoren, um das Verfahren zum automatischen Überführen eines Fahrzeugs in den Stillstand durchzuführen. Darüber hinaus kann das FAS zum Ausführen eines wenigstens teilautomatisierten Fahrens, insbesondere gemäß Level 3 oder höher, eingerichtet sein.

Ein dritter Erfindungsaspekt ist ein Computerprogramm, das Befehle umfasst, die bewirken, dass ein Fahrerassistenzsystem gemäß dem zweiten Erfindungsaspekt die Verfahrensschritte gemäß dem ersten Erfindungsaspekt ausführt. Dabei kann das Computerprogramm gemäß einigen Ausführungsformen auch mehrere Teile umfassen, die jeweils auf verschiedenen Rechenvorrichtungen des Fahrerassistenzsystems ausgeführt werden können.

Ein vierter Erfindungsaspekt ist ein computerlesbares Medium, auf dem ein Computerprogramm gemäß dem dritten Erfindungsaspekt gespeichert ist.

In Übereinstimmung mit einigen Ausführungsformen liegt der Erfindung die Erkenntnis zu Grunde, dass durch ein bestimmtes mehrphasiges Verzögerungsprofil ein rasches und zugleich sicheres automatisches Überführen eines Fahrzeugs aus einem automatisierten Fahrbetrieb in den Stillstand ermöglicht werden kann. Dabei kann z.B. zunächst eine Ankündigungsphase vorgesehen sein, die sich an eine Übernahmeaufforderung an den Fahrer anschließt und die z.B. für einige Sekunden andauert. Während der Ankündigungsphase kann ein Funktionsumfang eines Fahrerassistenzsystems degradiert sein, so dass zum Beispiel Beschleunigungen und/oder Spurwechsel nicht möglich sind. Bei ausbleibender Übernahme durch den Fahrer kann vorgesehen sein, dass das Fahrzeug mit einer vergleichsweise raschen, aber für den oder die Fahrzeuginsassen noch zumutbaren und für den nachfolgenden Verkehr noch bewältigbaren Verzögerung in einen Übergangsgeschwindigkeit gebracht wird, in welchem das Risiko für den oder die Fahrzeuginsassen wesentlich reduziert ist. Anschließend kann das Fahrzeug während einer Stabilisierungsphase für eine gewisse Zeit in dem Übergangsgeschwindigkeitsbereich gehalten werden, sodass der umgebende Verkehr sich gedanklich auf ein weiteres Abbremsen vorbereiten kann. Während der Stabilisierungsphase kann ein Nothalt vorbereitet werden, indem beispielweise ein automatischer Spurwechsel in eine hierfür geeignete vergleichsweise sichere Spur ausgeführt wird. Anschließend kann der eigentliche Nothalt, d.h. eine Überführung des Fahrzeugs aus dem Übergangsgeschwindigkeitsbereich in den Stillstand, ausgeführt werden. Dabei wird die Verzögerung bevorzugt in der Weise beschränkt, dass Risiken von Auffahrkollisionen begrenzt werden.

Die Erfindung wird nun anhand von Ausführungsbeispielen sowie unter Bezugnahme auf die beigefügten Zeichnungen näher erläutert.
- Fig. 1: zeigt beispielhaft ein schematisches Ablaufdiagramm eines erfindungsgemäßen Verfahrens.
- Fig. 2: zeigt beispielhaft ein schematisches Ablaufdiagramm gemäß einer Weiterbildung des Verfahrens aus Fig. 1.
- Fig. 3: zeigt ein Geschwindigkeits-Zeit-Diagramm, welches ein Ausführungsbeispiel eines erfindungsgemäßen Verfahrens schematisch veranschaulicht.

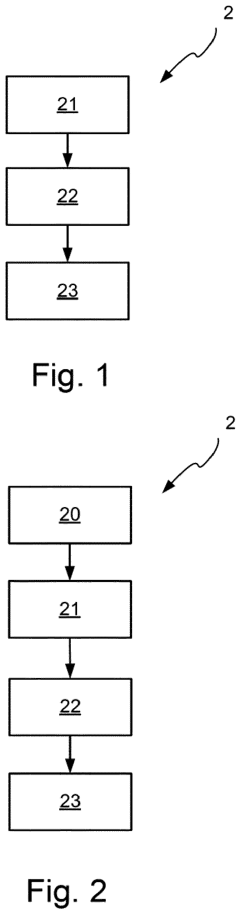

Die Fig. 1-2 jeweils ein schematisches Ablaufdiagramm eines Verfahrens 2 zum automatischen Überführen eines Fahrzeugs in den Stillstand.

Bei dem Verfahren gemäß Fig. 1 wird einem Schritt 21 die Geschwindigkeit des Fahrzeugs auf eine Übergangsgeschwindigkeit reduziert, wobei Übergangsgeschwindigkeit in einem Übergangsgeschwindigkeitsbereich von 55 km/h bis 85 km/h liegt. In einem weiteren Schritt 22 wird die Längsführung des Fahrzeugs in der Weise gesteuert bzw. geregelt, dass die Fahrzeuggeschwindigkeit für ein Übergangszeitintervall in dem Übergangsgeschwindigkeitsbereich verbleibt, wobei das Übergangszeitintervall für wenigstens 20 Sekunden andauert. Nach Ablauf dieses Übergangszeitintervalls erfolgt in einem Schritt 23 ein weiteres Verringern der Geschwindigkeit des Fahrzeugs bis zum Stillstand des Fahrzeugs.

Bei der Ausführungsvariante des Verfahrens 2 gemäß Fig. 2, welches ebenfalls sämtliche der vorgenannten Schritte 21-23 umfasst, wird das Überführen des Fahrzeugs in den Stillstand durch eine ausbleibende Fahrerreaktion auf eine Übernahmeaufforderung ausgelöst. Dementsprechend veranschaulicht Fig. 2 einen weiteren, den Schritten 21-23 vorgelagerten Schritt 20, in welchem eine Übernahmeaufforderung (TOR) an einen Fahrer des Fahrzeugs ausgegeben wird. Dabei kann z.B. vorgesehen sein, dass das Verringern 21 der Geschwindigkeit des Fahrzeugs zu einem Zeitpunkt einsetzt, welcher im Bereich von 4 bis 6 Sekunden, insbesondere im Bereich von 4,5 bis 5,5 Sekunden, bevorzugt 5 Sekunden nach der Ausgabe der (erfolglosen) Übernahmeaufforderung liegt.

Es kann dabei auch vorgesehen sein, dass eine automatische Fahrfunktion des Fahrzeugs ab dem Moment des TOR (und insbesondere bis zum Einsetzen des Verringerns 21 der Geschwindigkeit, d.h. bis zum Ablauf einer definierten Zeitintervalls, während dessen eine Fahrerreaktion auf den TOR abgewartet wird) in ihrem Funktionsumfang degradiert, z.B. in der Weise, dass ab diesem Zeitpunkt abhängig von der Fahrsituation Restriktionen an mögliche Fahrmanöver bestehen. Dies kann z.B. ein Verbot einer (insbesondere positiven) Fahrzeugbeschleunigung und oder eines Spurwechsels betreffen.

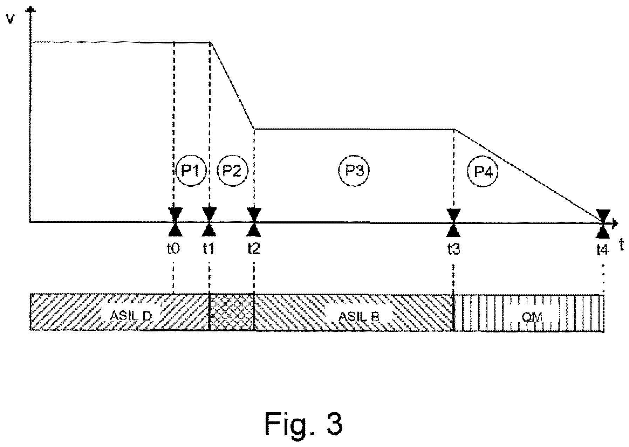

Die Fig. 3 zeigt ein schematisches Geschwindigkeits-Zeit-Diagramm, welches ein Ausführungsbeispiel eines erfindungsgemäßen Verfahrens 2 veranschaulicht. Dieses Ausführungsbeispiel wird im Folgenden im Einzelnen erläutert, wobei auch wieder auf die in den Fig. 1-2 schematisch dargestellten Verfahrensschritte 20-23 Bezug genommen wird.

Zu Beginn fährt das Fahrzeug bei einer vergleichsweise hohen Geschwindigkeit, wie z.B. bei 130 km/h, auf einer Autobahn. Dabei ist ein Fahrerassistenzsystem mit einer Level-3-Fahrfunktion aktiv. Es tritt sodann ein Fehlerfall auf, der keinen weiteren Fahrbetrieb mit nominaler Level-3-Fahrfunktion zulässt.

Der Fahrer wird daraufhin im Zeitpunkt t0 im Wege einer Übernahmeaufforderung über diesen Zustand informiert, und es wird ihm die Möglichkeit gegeben, die Fahraufgabe zu übernehmen. Gleichzeitig degradiert die Fahrfunktion in ihrem Funktionsumfang indem sie in abhängig von der Fahrsituation Restriktionen an mögliche Fahrmanöver definiert (z.B. keine positive Beschleunigung und/oder kein Spurwechsel mehr möglich). Die Übernahmeaufforderung entspricht dem Schritt 20 in Fig. 2.

Der Zeitpunkt t0 markiert also den Beginn einer Phase P1 des Verfahrens 2, in welcher das Fahrerassistenzsystem darauf erwartet, dass der Fahrer die Fahraufgabe übernimmt. Die Phase P1 kann auch als Ankündigungsphase bezeichnet werden, da sie dem Fahrer ankündigt, dass ein MRM eingeleitet werden wird, wenn er nicht in angemessener Zeit auf die Übernahmeaufforderung reagiert.

Während der Phase P1 bewegt sich das Fahrzeug noch mit der anfänglichen, vergleichsweise hohen Geschwindigkeit fort. Daher ist eine mögliche Schadensschwere bei einem Unfall noch relativ hoch, wie z.B. auf der Stufe S2 nach ISO 26262 (schwere bis lebensgefährliche Verletzungen - Überleben wahrscheinlich). Bei der Entwicklung des Fahrzeugs mitsamt dem Fahrerassistenzsystem muss dementsprechend für die Phase P1 des Verfahrens 2 z.B. die Sicherheitsintegritätsstufe ASIL D zu Grunde gelegt werden. Dies ist in Fig. 3 mit einem von links unten nach rechts oben schraffierten Balken schematisch veranschaulicht.

Die Phase P1 endet - falls der Fahrer nicht zuvor auf die Übernahmeaufforderung reagiert - zum Zeitpunkt t1, welcher vorzugsweise im Bereich von 4 bis 6 Sekunden, wie z.B. 5 Sekunden, nach der Ausgabe der Übernahmeaufforderung liegt.

Zu diesem Zeitpunkt t1 wird eine Phase P2 eingeleitet, in welcher die Geschwindigkeit des Fahrzeugs entsprechend dem Schritt 21 aus Fig. 1-2 durch einen Bremseingriff rasch auf eine vergleichsweise sichere Übergangsgeschwindigkeit verringert wird, bei welcher insbesondere das Risiko für eine Kollision mit anderen Verkehrsteilnehmern reduziert ist. Die Übergangsgeschwindigkeit liegt in einem Übergangsgeschwindigkeitsbereich von 55 km/h bis 85 km/h, wie z.B. bei 60 km/h oder bei 80 km/h. Der Übergangsgeschwindigkeitsbereich bzw. die in einer konkreten Situation gewählte Übergangsgeschwindigkeit leiten sich aus einer potenziellen Schadensschwere bei einer Kollision und der Erwartungen ab, die normale Verkehrsteilnehmer an das generelle Verhalten von anderen Verkehrsteilnehmern haben.

Bevorzugt wird eine Übergangsgeschwindigkeit gewählt, bei der eine potenzielle Schadensschwere auf die Stufe S1 nach ISO 26262 (leichte bis mäßige Verletzungen) begrenzt ist. Während der Phase P2 ist diese Übergangsgeschwindigkeit jedoch noch nicht erreicht, sodass hier ggf. noch mit der Schadensstufe S2 zu rechnen ist und eine Absicherung -jedenfalls während eines Abschnitts der Phase P2 - weiterhin gemäß ASIL D erfolgen muss.

Entsprechend den vorstehenden Erläuterungen zur Phase P2 kann diese Phase auch als Risikoreduktionsphase bezeichnet werden, weil darin das Fahrzeug so verzögert wird, dass das Risiko der Fahrzeuginsassen als auch das der anderen Verkehrsteilnehmer reduziert wird. Dabei ist es einerseits vorteilhaft, wenn die Verzögerung möglichst zügig erfolgt, damit die Risikoreduktion möglichst rasch eintritt. Andererseits soll die Verzögerung, d.h. die negative (Longitudinal-)Beschleunigung des Fahrzeugs, auf Werte beschränkt bleiben, bei denen die Kraftschlusswerte der Reifen bei normalen Fahrbahneigenschaften nicht übertreten werden und die durch den umgebenden (insbesondere nachfolgenden) Verkehr, der auf das Abbremsen des Fahrzeugs reagieren muss, beherrscht werden können. Darüber hinaus soll die Verzögerung für den oder die Insassen des Fahrzeugs (zumindest gerade noch) komfortabel sein.

Um diesen Anforderungen gerecht zu werden, ist bei dem Ausführungsbeispiel vorgesehen, dass das Verringern der Geschwindigkeit auf die Übergangsgeschwindigkeit bei einer Verzögerung im Bereich von 2 m/s² bis 4 m/s², bevorzugt im Bereich von 2,5 m/s² bis 3,5 m/s², wie z.B. bei 3 m/s² erfolgt. Beispielsweise entspricht unter normalen Bedingungen eine Verzögerung mit 3 m/s² auf eine Übergangsgeschwindigkeit von 80 km/h den genannten Anforderungen.

Mit der Angabe, wonach die Verzögerung während der Phase P2 in den vorstehend genannten Intervallen liegt, ist insbesondere gemeint, dass die untere Intervallgrenze (z.B. 2,5 m/s²) jedenfalls zu irgendeinem Zeitpunkt während der Phase P2 erreicht oder überschritten wird und dass die obere Intervallgrenze - jedenfalls bestimmungsgemäß, d.h. wenn nicht z.B. ein langsameres oder statisches Objekt bzw. Hindernis eine stärkeres Abbremsen (z.B. bei maximal 6 m/s²) nötig macht - während der Phase P2 nicht überschritten wird.

Vorzugsweise wird zu Beginn der Phase P2, d.h. im Zeitpunkt t1, eine Warnblinkanlage des Fahrzeugs aktiviert, um den umgebenden Verkehr visuell zu warnen. Die Warnblinkanlage kann beispielsweise während des gesamten Manövers, d.h. bis zum Stillstand und auch noch während des Stillstands, aktiviert bleiben. Des Weiteren ist denkbar, dass im Zeitpunkt t1 oder sogar bereits im Zeitpunkt t0 ein oder mehrere Warnsignale an den Fahrer des Fahrzeugs ausgegeben werden, wie z.B. ein akustisches Warnsignal, ein Signal einer Warnleuchte und/oder eine Lenkradvibration.

Ein Zeitpunkt t2, in dem die Übergangsgeschwindigkeit erreicht wird, markiert den Beginn einer Phase P3 des Verfahrens 2, die auch als Stabilisierungsphase bezeichnet werden kann. Bei dem Ausführungsbeispiel gemäß Fig. 3 kann die vorausgehende Risikoreduktionsphase P2 z.B. 6 Sekunden andauern, d.h. wenn der Zeitpunkt t1 5 Sekunden nach dem Zeitpunkt t0 liegt, kann der Zeitpunkt t2 z.B. 11 Sekunden nach dem Zeitpunkt t0 liegen.

Während der Stabilisierungsphase P3 wird die Längsführung des Fahrzeugs in der Weise gesteuert bzw. geregelt, dass die Fahrzeuggeschwindigkeit für ein Übergangszeitintervall in dem Übergangsgeschwindigkeitsbereich verbleibt, wobei das Übergangszeitintervall eine Dauer von wenigstens 20 Sekunden hat. Dies entspricht dem Verfahrensschritt 22 aus Fig. 1-2. Insbesondere auf einer deutschen Autobahn ist z.B. ein Übergangszeitintervall im Bereich von 20 bis 28 Sekunden, bevorzugt 23 bis 25 Sekunden, wie z.B. 24 Sekunden, angemessen.

Bei dem Ausführungsbeispiel gemäß Fig. 3 dauert die Stabilisierungsphase P3 dementsprechend bis zu einem Zeitpunkt t3 an, der z.B. 35 Sekunden nach dem Zeitpunkt t0 liegen kann (insbesondere wenn der Zeitpunkt t2 ca. 11 Sekunden nach dem Zeitpunkt t0 liegt).

Die Stabilisierungsphase P3 erfüllt zum einen die Funktion, die anderen Verkehrsteilnehmer zu warnen und ihnen die Gelegenheit zu geben, sich auf ein weiteres Abbremsen des Fahrzeugs einzustellen. Die vergleichsweise geringe Übergangsgeschwindigkeit kann nämlich den anderen Verkehrsteilnehmern die Information vermitteln, dass sich das Fahrzeug in einer Problemsituation befindet. Ergänzend dazu kann, wie oben erwähnt, eine Warnung mittels visueller Kommunikation (Warnblinkanlage) erfolgen.

Zum anderen kann das Fahrzeug während der Stabilisierungsphase P3 automatisch aus etwaigen Gefahrenstellen heraus bewegt werden. Um einen Halt in Gefahrenstellen zu vermeiden kann das Fahrzeug z.B. in dieser Phase auf die Spur mit dem geringsten Risiko wechseln. Mit anderen Worten kann z.B. während des Übergangszeitintervalls ein automatischer Spurwechsel ausgeführt werden, wobei der Spurwechsel bevorzugt in eine Spur erfolgt, die als geeignet angesehen wird, um in dieser Spur oder von dieser Spur ausgehend einen Nothalt auszuführen. Als sicherster Fahrsteifen in diesem Sinne wird z.B. auf einer deutschen Autobahn im Allgemeinen die rechte Spur oder der Seitenstreifen angesehen.

Es kann dabei vorgesehen sein, dass z.B. in Tunneln, in engen Kurven und/oder auf Brücken wird die Dauer des Übergangszeitintervalls dynamisch angepasst (d.h. insbesondere verlängert) wird, bis die entsprechenden Gefahrenstellen passiert sind.

In der Stabilisierungsphase P3 wird der Verkehrsfluss in der Umgebung des Fahrzeugs durch dessen vergleichsweise geringe Übergangsgeschwindigkeit so verzögert, dass das Risiko eines schwerwiegenden Schadens merklich verringert ist, wie z.B. auf Stufe S1 nach ISO 26262. Dementsprechend kann auch die Sicherheitslast in der Stabilisierungsphase wesentlich reduziert sein. Beispielsweise kann keine redundante Berechnung von bestimmten Funktionen mehr nötig sein. Verbleibende Funktionen können daher für geringere Sicherheitsanforderungen ausgelegt sein, wie z.B. gemäß ASIL B. Dies ist in Fig. 3 mit einem von links oben nach rechts unten schraffierten Balken schematisch veranschaulicht. Ein karierter Balkenabschnitt in Fig. 3, der sich über die Risikoreduktionsphase P2 erstreckt, veranschaulicht dabei schematisch, dass für die Risikoreduktionsphase anteilig ASIL D oder ASIL B zu Grunde zu legen sein kann.

Es kann vorgesehen sein, dass der Fahrer während des Übergangszeitintervalls, d.h. in der Stabilisierungsphase P3, die Fahrzeugsteuerung jederzeit übernehmen kann. Er kann also der in der Ankündigungsphase P1 verpassten Übernahmeaufforderung in der Stabilisierungsphase P3 noch verspätet nachkommen.

Ab dem Zeitpunkt t3, der das Ende der Stabilisierungsphase P3 und zugleich den Beginn einer Phase P4 des Verfahrens 2 markiert, wird das Fahrzeug aus dem Übergangsgeschwindigkeitsbereich in den Stillstand abgebremst (entsprechend dem Schritt 23 aus Fig. 1-2). Mit anderen Wort erfolgt in dieser Phase der eigentliche Nothalt des Fahrzeugs. Die Phase P4 kann daher auch als Nothalt-Phase bezeichnet werden.

Der Stillstand ist im Zeitpunkt t4 erreicht. Spätestens ab dem Zeitpunkt t4 ist somit ein sicherer Zustand (MRC) erreicht. In dem sicheren Zustand ist z.B. nur mehr mit einer potenzielle Schadensschwere der Stufe S0 nach ISO 26262 (keine Verletzungen; nur Materialschaden; Schaden kann nicht als sicherheitsrelevant angesehen werden) zu rechnen. Hinsichtlich der funktionalen Absicherung kann spätestens ab diesem Zeitpunkt von geringen Gefahren ausgegangen werden und dementsprechend die Bewertung QM gemäß ISO 26262 zu Grunde gelegt werden. In Fig. 3 ist dies mit einem senkrecht gestreiften Balken veranschaulicht, der sich bereits entlang der Nothalt-Phase P4 erstreckt.

Um eine Gefahr von Kollisionen mit dem folgenden Verkehr zu reduzieren kann die Verzögerung vorzugsweise maximal 3,5 m/s² und bevorzugt auf maximal 3,0 m/s² beschränkt sein. Eine Ausnahme hiervon greift wieder in Fällen, in denen ein stärkeres Abbremsen z.B. durch ein Hindernis nötig wird. In solchen Fällen sind auch betragsmäßig größere Verzögerungen zugelassen, wie z.B. bis maximal 6,0 m/s².

## Patentansprüche

1. Verfahren (2) zum automatischen Überführen eines Fahrzeugs in den Stillstand, umfassend die Schritte:
- Verringern (21) der Geschwindigkeit des Fahrzeugs auf eine Übergangsgeschwindigkeit, die in einem Übergangsgeschwindigkeitsbereich von 55 km/h bis 85 km/h liegt;
- Verbleiben (22) in dem Übergangsgeschwindigkeitsbereich für ein Übergangszeitintervall mit einer Dauer von wenigstens 20 Sekunden;
- nach Ablauf des Übergangszeitintervalls, weiteres Verringern (23) der Geschwindigkeit des Fahrzeugs bis zum Stillstand des Fahrzeugs.

2. Verfahren (2) nach einem der vorhergehenden Ansprüche, wobei das Verringern der Geschwindigkeit auf die Übergangsgeschwindigkeit bei einer Verzögerung im Bereich von 2 m/s² bis 4 m/s² erfolgt.

3. Verfahren (2) nach einem der vorhergehenden Ansprüche, wobei während des Übergangszeitintervalls ein automatischer Spurwechsel ausgeführt wird.

4. Verfahren (2) nach einem der vorhergehenden Ansprüche, wobei während des Übergangszeitintervalls eine Übernahme der Fahrzeugführung durch den Fahrer möglich ist.

5. Verfahren (2) nach einem der vorhergehenden Ansprüche, wobei bei dem weiteren Verringern (22) der Geschwindigkeit die Verzögerung des Fahrzeugs auf maximal 3,5 m/s² begrenzt ist.

6. Verfahren (2) nach einem der vorhergehenden Ansprüche, wobei das Überführen des Fahrzeugs in den Stillstand durch eine ausbleibende Fahrerreaktion auf eine Übernahmeaufforderung ausgelöst wird.

7. Verfahren (2) nach Anspruch 6, wobei das Verringern (21) der Geschwindigkeit des Fahrzeugs zu einem Zeitpunkt einsetzt, welcher im Bereich von 4 bis 6 Sekunden nach der Ausgabe der Übernahmeaufforderung liegt.

8. Verfahren (2) nach Anspruch 6 oder 7, wobei eine automatische Fahrfunktion des Fahrzeugs ab dem Moment der Übernahmeaufforderung in ihrem Funktionsumfang degradiert wird.

9. Fahrerassistenzsystem, welches zumindest eine Steuervorrichtung umfasst, welche zum Ausführen eines Verfahrens nach einem der vorhergehenden Ansprüche eingerichtet ist.

10. Computerprogramm, das Befehle umfasst, die bei der Ausführung des Computerprogramms durch eine Recheneinrichtung eines Fahrerassistenzsystems nach Anspruch 9 dieses veranlassen, die Verfahrensschritte nach einem der Ansprüche 1 bis 8 auszuführen.

11. Computerlesbares Medium, auf dem ein Computerprogramm nach Anspruch 10 gespeichert ist.

## Claims

1. Method (2) for automatically bringing a vehicle to a standstill, comprising the steps of:
- reducing (21) the speed of the vehicle to a transition speed which lies a transition speed range of from 55 km/h to 85 km/h;
- remaining (22) in the transition speed range for a transition time interval with a duration of at least 20 seconds;
- further reducing (23) the speed of the vehicle until the vehicle comes to a standstill after the transition time interval has elapsed.

2. Method (2) according to one of the preceding claims, wherein the speed is reduced to the transition speed with a deceleration in the range of from 2 m/s² to 4 m/s².

3. Method (2) according to one of the preceding claims, wherein an automatic lane change is executed during the transition time interval.

4. Method (2) according to one of the preceding claims, wherein it is possible for the driver to take over control of the vehicle during the transition time interval.

5. Method (2) according to one of the preceding claims, wherein the deceleration of the vehicle is limited to a maximum of 3.5 m/s² during the further reduction (22) in speed.

6. Method (2) according to one of the preceding claims, wherein the process of bringing the vehicle to a standstill is triggered by the driver failing to react to a takeover request.

7. Method (2) according to Claim 6, wherein the reduction (21) in the speed of the vehicle starts at a time which lies in the range of from 4 to 6 seconds following the output of the takeover request.

8. Method (2) according to Claim 6 or 7, wherein the functional scope of an automatic driving function of the vehicle is downgraded starting from the moment at which the takeover request was made.

9. Driver assistance system which comprises at least one control apparatus which is designed to execute a method according to one of the preceding claims.

10. Computer program which comprises commands which, when the computer program is executed by a computer device of a driver assistance system according to Claim 9, prompt said driver assistance system to execute the method steps according to one of Claims 1 to 8.

11. Computer-readable medium on which a computer program according to Claim 10 is stored.

## Revendications

1. Procédé (2) pour le passage automatique d'un véhicule à l'arrêt, comprenant les étapes suivantes :
- la réduction (21) de la vitesse du véhicule jusqu'à une vitesse de transition qui se situe dans une plage de vitesses de transition allant de 55 km/h à 85 km/h ;
- le maintien (22) dans la plage de vitesses de transition pendant un intervalle de temps de transition d'une durée d'au moins 20 secondes ;
- après l'écoulement de l'intervalle de temps de transition, la réduction supplémentaire (23) de la vitesse du véhicule jusqu'à l'arrêt du véhicule.

2. Procédé (2) selon l'une quelconque des revendications précédentes, dans lequel la réduction de la vitesse jusqu'à la vitesse de transition a lieu avec une décélération dans la plage allant de 2 m/s² à 4 m/s².

3. Procédé (2) selon l'une quelconque des revendications précédentes, dans lequel un changement de voie automatique est exécuté pendant l'intervalle de temps de transition.

4. Procédé (2) selon l'une quelconque des revendications précédentes, dans laquelle une prise en charge de la conduite du véhicule par le conducteur est possible pendant l'intervalle de temps de transition.

5. Procédé (2) selon l'une quelconque des revendications précédentes, dans lequel la décélération du véhicule est limitée à 3,5 m/s² au maximum lors de la réduction supplémentaire (22) de la vitesse.

6. Procédé (2) selon l'une quelconque des revendications précédentes, dans laquelle le passage du véhicule à l'arrêt est déclenché par l'absence de réaction du conducteur à une demande de prise en charge.

7. Procédé (2) selon la revendication 6, dans lequel la réduction (21) de la vitesse du véhicule commence à un moment qui se situe dans la plage allant de 4 à 6 secondes après l'émission de la demande de prise en charge.

8. Procédé (2) selon la revendication 6 ou 7, dans laquelle une fonction de conduite automatique du véhicule est dégradée dans l'étendue de sa fonction à partir du moment de la demande de prise en charge.

9. Système d'assistance à la conduite qui comprend au moins un dispositif de commande qui est conçu pour exécuter un procédé selon l'une quelconque des revendications précédentes.

10. Programme informatique comprenant des instructions qui, lors de l'exécution du programme informatique par un dispositif de calcul d'un système d'assistance à la conduite selon la revendication 9, amènent celui-ci à exécuter les étapes de procédé selon l'une quelconque des revendications 1 à 8.

11. Support lisible par ordinateur sur lequel est enregistré un programme informatique selon la revendication 10.
